# FASCICULE DE BREVET EUROPEEN

(11) **EP 0 877 891 B1**
(45) Date de publication et mention de la délivrance du brevet: **18.12.2002**
(21) Numéro de dépôt: 97948955.6
(22) Date de dépôt: 28.11.1997
(51) Int. Cl.: F16L 37/34

(54) **RACCORD RAPIDE ETANCHE**
ABGEDICHTETE SCHNELL-KUPPLUNG
TIGHT RAPID ACTION PIPE COUPLING

(30) Priorité: 29.11.1996 FR 9614653
(43) Date de publication de la demande: 18.11.1998
(73) Titulaire: VALEO EMBRAYAGES, 80009 Amiens Cedex 1 (FR)
(72) Inventeur: TOBIASZ, André, F-93800 Epinay-sur-Seine (FR)
(74) Mandataire: Gamonal, Didier
(86) Numéro de dépôt international: FR9702153
(87) Numéro de publication internationale: WO98023892

(56) Documents cités:
- EP-A- 0 742 403
- GB-A- 1 452 068
- US-A- 4 124 228
- US-A- 5 129 423

## Description

La présente invention concerne un agencement d'une interconnexion de deux tronçons d'une conduite.

L'invention concerne plus particulièrement un agencement d'une interconnexion de deux tronçons d'une conduite, dans laquelle circule un fluide, appartenant notamment à un circuit de commande hydraulique d'un embrayage de véhicule automobile.

Un tel type d'agencement d'une interconnexion de deux tronçons d'une conduite, aussi appelé raccord rapide,- est décrit et représenté par exemple dans le document FR-A-1.080.178. Dans ce document, le raccord comprend deux éléments de forme générale tubulaire agencés pour pouvoir être introduits téléscopiquement l'un dans l'autre et un dispositif pour verrouiller les deux éléments du raccord lorsqu'ils sont en position accouplée, c'est-à-dire lorsque l'un des éléments du type mâle est introduit dans l'autre élément du type femelle.

L'invention concerne ainsi un agencement d'une interconnexion de deux tronçons d'une conduite, ci-après dénommé raccord, qui est du type comportant une paire d'éléments complémentaires dont l'un comprend un corps tubulaire dont l'extrémité arrière est fermée par une pièce qui se prolonge axialement par une queue de raccordement et de fixation de l'un des tronçons de la conduite qui est traversée axialement par un perçage qui débouche dans une chambre délimitée radialement par le corps tubulaire et axialement vers l'avant par un obturateur normalement fermé pour rendre l'élément de raccord étanche lorsque les deux éléments ne sont pas accouplés entre eux.

Le raccord est du type dans lequel l'obturateur d'un premier des éléments du raccord comporte un premier capuchon, agencé à l'extrémité libre avant d'une tige centrale de l'élément, avec lequel coopère un joint d'étanchéité de forme générale annulaire qui est monté mobile axialement à l'intérieur du corps tubulaire entre une position avant d'obturation vers laquelle il est rappelé élastiquement et dans laquelle il intervient entre la paroi cylindrique interne du corps tubulaire et un siège formé sur une portion arrière du premier capuchon, et une position arrière d'ouverture vers laquelle il est déplacé par une portion d'extrémité avant du corps tubulaire du second élément du raccord lorsque les deux éléments sont accouplés.

Par ailleurs on connaît du document EP-A-0742 403 un raccord hydraulique étanche 20 destiné à interconnecter, de manière rapide, deux parties 10A et 10B d'un conduit 10 véhiculant un fluide et dans lequel le conduit est matière déformable, par exemple en matière souple ou en matière semi-rigide.

Le raccord 20 comporte deux éléments 21, 22 comprenant chacun un corps cylindrique extérieur creux 1, 11 recevant l'extrémité libre de la partie concernée 10A, 10B du conduit 10 déformable.

Chaque élément 21, 22 comporte un manchon 4 de passage de fluide monté coaxialement à l'intérieur du corps extérieur 1, 11.

Chaque extrémité libre de la partie 10A, 10B du conduit déformable 10 est montée à serrage entre le corps extérieur 1, 11 et le manchon 4 en s'étendant à l'arrière du passage de fluide 25 du manchon 4. Chaque corps extérieur 1, 11 consiste en un fourreau cylindrique de forme tubulaire présentant une portion arrière pour serrage de l'extrémité de la partie concernée 10A, 10B du conduit déformable 10.

Chaque manchon 4 comporte des saillies dirigées vers l'extérieur et ancrées dans l'extrémité libre déformable de ladite partie 10A, 10B du conduit 10. Ainsi on obtient une fixation solide et sûre des parties 10A et 10 dans les éléments 21, 22 et ces parties appartiennent de manière simple et économique au raccord 20.

Dans ce document la précision de l'assemblage n'est pas satisfaisante, il se pose en outre des problèmes de coaxialité, notamment de positionnement axial du manchon 4 par rapport au corps extérieur 1, 11. De plus, le ressort 8 est en appui sur le joint d'étanchéité 9 qui est lui-même en appui sur l'extrémité libre de la conduite souple.

Ainsi, compte tenu des risques de fluage, tant du joint 9 que de l'extrémité libre 10A, il en résulte un manque de fiabilité des étanchéités et une variation de l'effort exercé par le ressort 8.

De plus en cas de fuite ou de perçage de la conduite, son remplacement nécessite un démontage complet d'une des deux parties du raccord hydraulique 20, notamment la désolidarisation du fourreau extérieur 1 et du manchon 4.

La présente invention a pour objet de proposer un perfectionnement à la conception connue d'un raccord hydraulique du type de celui décrit et représenté dans le document FR-A-1.080.178, qui permet notamment d'améliorer la circulation du fluide et de faciliter l'assemblage des composants du raccord et qui évite aussi de faire appel à la conception selon le document EP-A-0 742 403 dans lequel les tronçons de conduite appartiennent au raccord.

Dans ce but, l'invention propose un agencement d'une interconnexion de deux tronçons d'une conduite selon le préambule de la revendication 1, caractérisé en ce que ladite tige centrale comporte un canal axial interne qui prolonge le perçage axial de la pièce de fermeture et de raccordement et qui débouche radialement dans ladite chambre par au moins un orifice formé dans la paroi cylindrique annulaire de la tige centrale, et en ce que. l'extrémité libre arrière de la tige centrale creuse est fixée coaxialement à l'intérieur du perçage axial de la pièce de fermeture et de raccordement.

Grâce à un tel agencement, la circulation du fluide est facilitée dans la mesure où celui-ci circule directement du perçage central de la pièce de fixation et de raccordement à l'intérieur de la tige axiale creuse qui porte le capuchon et il peut ainsi s'écouler longitudinalement à l'intérieur de l'élément de raccord sans passer à travers d'autres composants de l'élément, et notamment sans passer à travers un ressort de rappel de l'obturateur en position fermée.

Cette conception est aussi avantageuse en ce que la tige creuse qui porte le capuchon est initialement solidaire de la queue de fixation et de raccordement, ce qui permet de simplifier les différentes opérations d'assemblage des composants de l'élément du raccord, ce qui limite le nombre de composants et simplifie leur stockage.

De plus, la conception est particulièrement robuste, notamment en ce que le capuchon fixe est porté par une tige creuse robuste, elle-même fixée de manière fiable à la pièce de raccordement et de fixation elle-même de conception massive et robuste.

Afin d'améliorer encore la bonne circulation du fluide, ledit orifice formé dans la paroi cylindrique annulaire de la tige centrale creuse est constitué par au moins une fente d'orientation axiale qui s'étend sensiblement sur toute la longueur de la tige centrale.

En position arrière d'ouverture du joint mobile d'étanchéité, l'extrémité avant de ladite fente s'étend axialement vers l'avant au-delà de la surface de portée du joint mobile d'étanchéité qui est susceptible de coopérer avec ledit siège du premier capuchon qui est fixe, l'écoulement étant ainsi facilité et s'effectuant notamment au droit du joint mobile d'étanchéité qui présente intérieurement une forme favorable à cet écoulement.

Afin de faciliter l'assemblage des différents composants et de rendre particulièrement fiable la fixation du capuchon sur sa tige de support, le capuchon fixe comporte un pied central cylindrique coaxial qui s'étend axialement vers l'arrière et qui est reçu à l'intérieur d'un logement complémentaire formé dans l'extrémité libre avant de la tige centrale et dans lequel il est fixé axialement, par exemple par sertissage à l'intérieur du logement complémentaire. Pour assurer aisément, simplement et rapidement cette fixation axiale, le pied central peut aussi être emboîté élastiquement dans le logement complémentaire.

Le joint mobile d'étanchéité est rappelé élastiquement vers sa position avant d'obturation par un ressort à boudin qui est monté comprimé axialement entre la pièce de fermeture et de raccordement et le joint mobile d'étanchéité, le joint mobile d'étanchéité pouvant comporter un corps de joint annulaire souple en caoutchouc ou en matériau élastomère renforcé par une armature rigide.

Cette conception permet d'améliorer la tenue du joint mobile d'étanchéité et de faciliter son coulissement à l'intérieur du corps tubulaire.

Afin d'éviter d'endommager le corps de joint annulaire souple, l'extrémité avant du ressort à boudin prend appui axialement contre une surface annulaire d'appui appartenant à l'armature de renfort du joint mobile d'étanchéité.

Selon un autre aspect de l'invention, la pièce de fermeture et de raccordement comporte un tronçon avant de forme générale cylindrique qui est reçu, avec interposition d'un joint fixe d'étanchéité, à l'intérieur de la partie d'extrémité arrière du corps tubulaire du premier élément du raccord.

De manière avantageuse, le corps tubulaire est un fourreau métallique dont la partie d'extrémité arrière est fixée à la pièce de fermeture et de raccordement par sertissage radial au droit d'une gorge radiale interne formée dans ledit tronçon avant, la gorge qui reçoit le joint fixe d'étanchéité permettant ainsi d'effectuer l'opération de sertissage radial sans avoir recours à une autre gorge spécifique habituellement prévue pour l'opération de sertissage radial.

L'agencement selon l'inventioncomporte des moyens de centrage mutuel des obturateurs complémentaires des deux éléments du raccord lors de l'accouplement de ceux-ci qui comportent une cavité tronconique à fond plat formée dans la face transversale d'extrémité avant de l'un des deux capuchons, fixe et mobile appartenant respectivement aux obturateurs, et une tête de forme complémentaire agencée dans la face transversale d'extrémité avant de l'autre capuchon. L'air ne peut pas pénétrer ainsi dans l'agencement formant un raccord rapide étanche.

Les deux éléments complémentaires du raccord sont du type mâle et femelle, et il est prévu des moyens débrayables de verrouillage des deux éléments en position accouplée qui les retiennent axialement l'un par rapport à l'autre dans une position axiale relative.

D'autres caractéristiques et avantages de l'invention apparaîtront à la lecture de la description détaillée qui suit pour la compréhension de laquelle on se reportera aux dessins annexés dans lesquels :
- la figure 1 est une vue en section axiale d'un exemple de réalisation d'un agencement d'une interconnexion de deux tronçons d'une conduite réalisé conformément aux enseignements de l'invention et sur laquelle les deux éléments mâle et femelle de l'agencement ou raccord sont illustrés en début de phase d'accouplement par introduction axiale de l'élément mâle dans l'élément femelle ;
- la figure 2 est une vue de détail de la partie arrière de l'élément femelle du raccord qui illustre le mode de fixation de la tige centrale creuse dans la pièce de raccordement et de fixation ;
- la figure 3 est une vue similaire à celle de la figure 1 sur laquelle les deux éléments de l'agencement ou raccord sont illustrés dans la position axiale relative dans laquelle les capuchons des obturateurs des deux éléments viennent d'entrer en contact mutuel ; et
- la figure 4 est une vue similaire à celle des figures 1 et 3 dans laquelle les deux éléments sont en position accouplée et verrouillée.

L'agencement 10 forme un raccord rapide hydraulique étanche 10 illustré sur les figures, d'une interconnexion de deux tronçons 31,32 d'une conduite dans laquelle circule un fluide appartenant ici à un circuit de commande hydraulique d'un embrayage de véhicule automobile, comporte un premier élément femelle 11 et un second élément mâle 12.

Les deux éléments femelle 11 et mâle 12 sont complémentaires et chacun, comprend un corps de forme générale tubulaire cylindrique 13, 14 constitué par un fourreau métallique dont l'extrémité arrière 15, 16 est fermée par une pièce de fermeture et de raccordement 17, 18. Chacune des pièces de raccordement 17, 18 comporte un tronçon avant massif 19, 20 qui est reçu dans la partie d'extrémité arrière 15, 16 du fourreau tubulaire 13, 14 et qui comporte à sa périphérie externe une gorge radiale interne 21, 22 qui reçoit un joint torique d'étanchéité fixe 23, 24 assurant l'étanchéité de la partie arrière du corps tubulaire 13, 14 par rapport à la pièce de fermeture et de raccordement 17, 18.

La fixation axiale étanche entre le corps tubulaire 13, 14 et le tronçon avant 19, 20 est assurée par un sertissage radial interne 25, 26 de la partie arrière 15, 16 qui est effectué au droit de la gorge 21, 22 qui reçoit le joint d'étanchéité fixe 23, 24. Les gorges 41,42 ont ainsi une double fonction.

Le tronçon avant massif 19, 20 de fixation de la pièce 17, 18 se prolonge axialement vers l'arrière par une queue de raccordement 27, 28 qui est réalisée venue de matière en une seule pièce et qui, selon une conception connue dite "en sapin", comporte par exemple des parties en relief de forme tronconique 29, 30 agencées axialement successivement et qui servent au raccordement et à la retenue d'un tronçon 31, 32 d'une conduite souple, la fixation étant par exemple assurée au moyen d'un collier de serrage 33, 34.

Chaque élément 11, 12 de l'agencement ou raccord hydraulique se présente ainsi sous la forme d'un élément autonome qui, avec sa pièce 17, 18 de fixation et de raccordement hydraulique, peut être fixé à l'extrémité d'un tronçon de conduite souple 31, 32 indépendamment de la fabrication de cette conduite et par des moyens classiques très simples tels que des colliers de serrage 33, 34.

L'invention n'est pas limitée à ce type de moyens de fixation des tronçons de conduite 31, 32 sur les queues 27, 28 des pièces 17, 18 de fixation et de raccordement qui, on le notera, sont de conception identique pour limiter le nombre de composants différents d'un raccord hydraulique 10.

Chacune de ces pièces 17, 18 est bien entendu traversée coaxialement en son centre par un perçage axial étagé 35, 36 qui débouche de part en part et qui est constitué par un tronçon axial arrière 37, 38 et par un tronçon axial avant 39, 40 de plus grand diamètre qui débouche dans la face annulaire d'extrémité axiale avant 41, 42 du tronçon avant 19, 20 de la pièce 17, 18.

Cette face annulaire avant 41, 42 délimite axialement vers l'avant une chambre ou cavité interne 43, 44 de l'élément 11, 12 qui est délimitée radialement vers l'extérieur par la surface cylindrique interne 45, 46 du fourreau tubulaire 13, 14.

Chacune des faces annulaires 41, 42 constitue une surface annulaire arrière d'appui pour l'extrémité arrière 47, 48, c'est-à-dire pour la dernière spire, d'un ressort à boudin 49, 50 qui est agencé axialement à l'intérieur de la chambre 43, 44.

Chaque ressort 49, 50 est un ressort de rappel vers sa position de fermeture d'un obturateur, normalement fermé, 51, 52 qui délimite axialement vers l'avant la chambre 43, 44 lorsque les deux éléments 11 et 12 du raccord 10 ne sont pas accouplés, de manière à assurer une obturation étanche de chaque élément femelle 11 et mâle 12 du raccord hydraulique 10.

Chaque obturateur 51, 52, avantageusement en matière moulable ici en matière plastique, comporte un capuchon 53, 54 qui coopère avec un joint d'étanchéité 55, 56.

Dans l'exemple de réalisation illustré sur les figures, l'élément femelle 13 est obturé par l'obturateur 51 qui est un obturateur du type à capuchon fixe 53 et à joint d'étanchéité mobile 55.

Le capuchon fixe 53 est fixé axialement à l'extrémité libre avant 57 d'une tige centrale de support 59 qui est coaxiale à l'élément 11.

La tige centrale 59, ici en matière plastique, est une tige creuse qui comporte un perçage axial interne 61 qui la traverse de part en part.

La partie d'extrémité avant 57 de la tige centrale creuse 59 comporte un alésage avant de diamètre réduit 63 qui constitue un logement qui reçoit le pied central arrière 65, de diamètre complémentaire, du capuchon fixe 53 qui est réalisé venu de matière par moulage, par exemple en matière plastique, avec le corps 67 du capuchon fixe 53 en forme de plateau qui s'étend radialement vers l'extérieur à partir du pied central 65 et qui est délimité vers l'arrière par une surface convexe 69 constituant un siège fixe d'étanchéité avec lequel coopère une surface concave complémentaire 71, orientée axialement vers l'avant, du joint mobile d'étanchéité 55.

La forme des surfaces 69,71 favorise le passage du fluide de commande lorsque les deux éléments 11,12 sont accouplés.

Le corps avant 67 du capuchon fixe 53 est délimité axialement vers l'avant par une face transversale d'extrémité avant 73 de forme creuse tronconique qui constitue une portée de centrage dont la fonction sera expliquée par la suite.

Dans l'exemple illustré sur les figures, le pied central 65 est fixé axialement à la partie d'extrémité avant 57 de la tige centrale creuse 59 par emboîtement élastique, c'est-à-dire qu'un bourrelet 75 de l'alésage 63 est reçu dans une gorge complémentaire formée radialement vers l'intérieur dans la surface cylindrique externe du pied central 65, ce dernier étant évidé intérieurement pour faciliter le moulage et l'assemblage par emboîtement élastique.

Bien entendu on peut inverser les structures, le bourrelet appartenant alors au pied 65 et la gorge à l'alésage 63.

La tige centrale creuse 59 est fixée à la pièce de raccordement et de fixation 17 par sa partie d'extrémité axiale arrière 77 qui est reçue dans le tronçon avant de plus grand diamètre 39 du perçage axial interne 35 de la pièce 17.

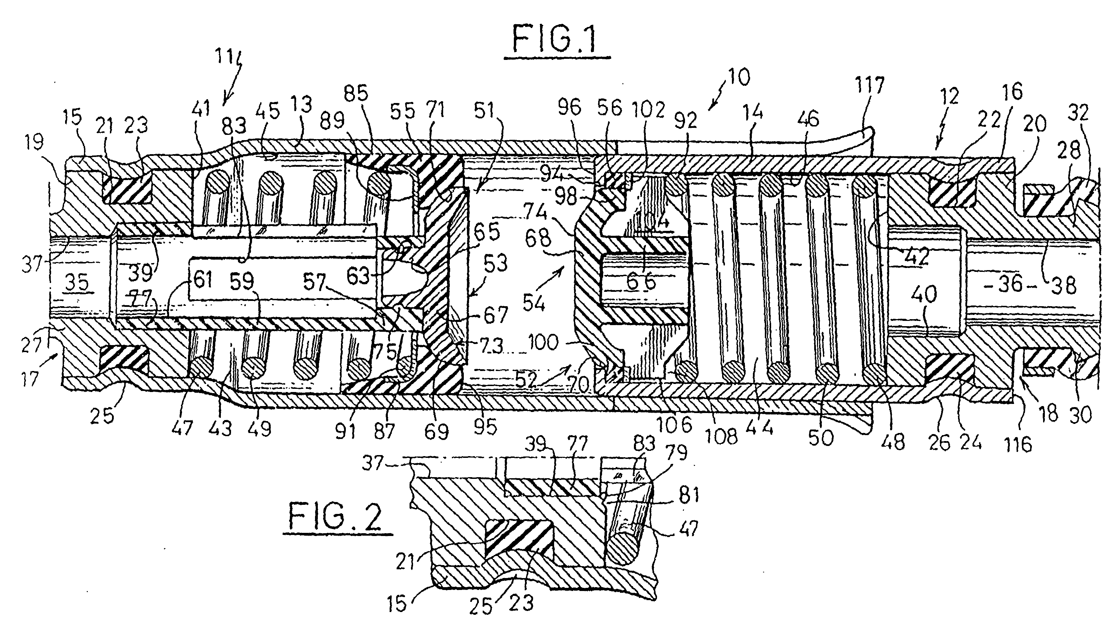

La tige 59 est ainsi centrée coaxialement par rapport à la pièce 17 et au fourreau 13 et elle est retenue axialement par rapport à la pièce 17 par une opération de sertissage qui permet, à partir de la face avant 41 de la pièce 17, de réaliser, comme on peut le voir en détail à la figure 2, une série de becs 79 de retenue axiale qui sont réalisés par des opérations de sertissage 81 et qui s'étendent en regard de la partie d'extrémité axiale arrière 77 qui délimite axialement vers l'arrière une fente 83 qui est formée dans le corps tubulaire de la tige centrale creuse 59.

Dans le mode de réalisation illustré sur les figures, la tige 59 comporte trois fentes 83 d'orientation axiale qui s'étendent depuis la partie arrière 77 jusqu'à la partie avant 57 de la tige centrale 59.

Les fentes 83 sont largement dimensionnées et elles offrent ainsi une section importante de passage au fluide entre la chambre 43 et le perçage axial 35.

Le joint mobile d'étanchéité 55 est une coupelle d'étanchéité constituée par un corps souple en matériau élastomère de forme générale annulaire dont la forme cylindrique 85 est complémentaire de la paroi cylindrique interne 45 du fourreau tubulaire 13, le corps étant renforcé par une armature 87 qui présente une section en forme de L.

L'armature 87 est ici métallique, mais elle peut aussi être réalisée en matière plastique rigide, la liaison entre le corps du joint et son armature 87 étant réalisée par collage, par adhérisation ou par surmoulage, pour réduction du nombre des pièces à stocker.

Outre sa fonction de renfort du joint 55, l'armature 87 délimite, par sa portion 89 d'orientation radiale, une surface annulaire avant d'appui pour la spire d'extrémité axiale avant 91 du ressort de rappel 49.

En position désaccouplée des éléments 11 et 12 de l'agencement, le ressort de rappel 49 sollicite le joint mobile d'étanchéité 55 en contact étanche avec le siège 69 du capuchon fixe 53 de manière à assurer une obturation étanche de l'élément femelle 11 du raccord 10.

L'obturateur 52 de l'élément mâle 12 de l'agencement étanche 10 est un obturateur à capuchon mobile 54 et à joint d'étanchéité 56 fixe par rapport au fourreau tubulaire 14 de cet élément 12.

Le fourreau tubulaire 14 se termine à son extrémité axiale libre avant par un collet radial interne 94 dont la face annulaire d'extrémité avant 96 est susceptible de coopérer avec la face annulaire d'extrémité avant 95 du corps du joint mobile d'étanchéité 55 de l'élément femelle 13 du raccord étanche 10.

Le collet radial interne 94 reçoit en coulissement avec un léger jeu radial une portion cylindrique 98 du corps avant 68 du capuchon mobile 54 qui délimite un siège cylindrique coaxial 70 d'étanchéité de l'obturateur 52 avec lequel coopère de manière étanche le joint fixe d'étanchéité 56.

Le joint 56 est reçu dans un logement en forme de gorge délimitée axialement vers l'avant dans la face annulaire arrière 100 du collet 94 et vers l'arrière par la face annulaire avant d'une rondelle 102 rapportée à l'intérieur de la partie d'extrémité libre avant du fourreau tubulaire 14.

La conception faisant appel à une rondelle 102 est particulièrement avantageuse en ce qu'elle permet d'utiliser un fourreau tubulaire 14 d'épaisseur constante. A titre de variante, il est possible de réaliser la gorge qui reçoit le joint d'étanchéité 56 sous la forme d'une gorge radiale interne d'une partie avant plus massive du corps tubulaire 14.

Le capuchon mobile 54 est ici une pièce moulée, axialement à partir de deux demi-coquilles, en matière plastique qui comporte un pied central en forme de manchon 66 évidé centralement qui se prolonge axialement vers l'avant par le corps 68 en forme de plateau dont la face d'extrémité axiale avant 74 est bombée et de forme tronconique complémentaire de la face concave 73 d'extrémité avant du capuchon fixe 53, de manière à assurer un centrage mutuel des obturateurs 51 et 52 lors de l'accouplement des deux éléments 11 et 12 du raccord.

A partir du pied central en forme de manchon tubulaire 66 favorisant le moulage, le capuchon mobile 54 comporte une série d'ailettes 104 en forme de voiles radiaux, favorisant le passage du fluide, qui s'étendent radialement vers l'extérieur et qui sont délimitées extérieurement radialement par des bords 106 d'orientation axiale.

Les ailettes 104 constituent un tronçon arrière de guidage du capuchon mobile 54 en coulissement à l'intérieur de la surface cylindrique interne 46 du fourreau tubulaire 14, les bords 106 des ailettes 104 étant reçus avec jeu radial dans la surface 46 de manière à permettre un mouvement de pivotement en rotule du capuchon mobile 54 à l'intérieur du fourreau tubulaire 14 lors de l'accouplement pour faciliter le centrage mutuel des deux obturateurs 51 et 52 par coopération des faces 73,74.

Les ailettes 104 sont délimitées axialement vers l'arrière par des bords transversaux d'extrémité axiale arrière 108 qui comportent un décrochement constituant une surface annulaire avant d'appui pour la spire d'extrémité avant 92 du ressort de rappel à boudin 50 qui sollicite axialement en permanence le capuchon mobile 54 vers sa position de repos dans laquelle il obture de manière étanche l'élément 12 du raccord 10, lorsque les deux éléments ne sont pas accouplés.

La position de repos du capuchon fixe 54 est délimitée par la venue en butée des bords transversaux d'extrémité axiale avant 110 des ailettes 104 qui viennent en butée contre la face annulaire arrière de la rondelle 102.

Le diamètre du ressort cylindrique à boudin 50 est sensiblement égal au diamètre interne. du fourreau tubulaire 14 de manière que ses spires ne s'étendent pas sur le trajet du liquide, comme cela sera expliqué par la suite, qui peut passer directement entre les ailettes 104 à l'intérieur du ressort 50 en direction du perçage 36 de la pièce 18.

On notera que le nombre de composants de chacun des éléments 11, 12 de l'agencement 10 est particulièrement réduit et que leur assemblage est très simple.

Dans le cas de l'élément femelle 11, après avoir serti le corps tubulaire 13 sur la pièce de raccordement 17 dans laquelle a préalablement été sertie la tige centrale 59, il suffit d'introduire axialement le ressort de rappel 49 puis le joint mobile d'étanchéité 55 et enfin le capuchon fixe 53, l'assemblage des composants étant obtenus par emboîtement élastique du capuchon à l'intérieur de l'extrémité avant 57 de la tige centrale 59 en matière plastique, tous les composants occupant alors, de manière indémontable la position illustrée à la figure 1.

De même, dans le cas de l'élément mâle 12, l'assemblage commence par la mise en place du joint fixe d'étanchéité 56, la rondelle 102, puis du capuchon mobile 54 qui est introduit axialement de l'arrière vers l'avant, puis du ressort de rappel 50 et enfin du tronçon massif avant 20 de la pièce 18 de raccordement et de fixation, l'assemblage final des composants étant obtenu par l'opération de sertissage 26 qui aboutit à la liaison définitive entre le fourreau 14 et la pièce de fixation 18, l'ensemble des composants étant alors assemblé de manière indémontable.

Selon une conception connue, les deux éléments 11 et 12 comportent des moyens complémentaires du type à crans et épaulement 116 et 117 qui permettent de verrouiller les deux éléments en position axiale d'accouplement, le fourreau 13 portant à son extrémité avant des pattes inclinées élastiques 116 venant en prise avec la face annulaire arrière du tronçon 20 de la pièce 18.

L'accouplement et le raccordement hydraulique des deux éléments 11 et 12 de l'agencement 10 s'effectuent de la manière suivante.

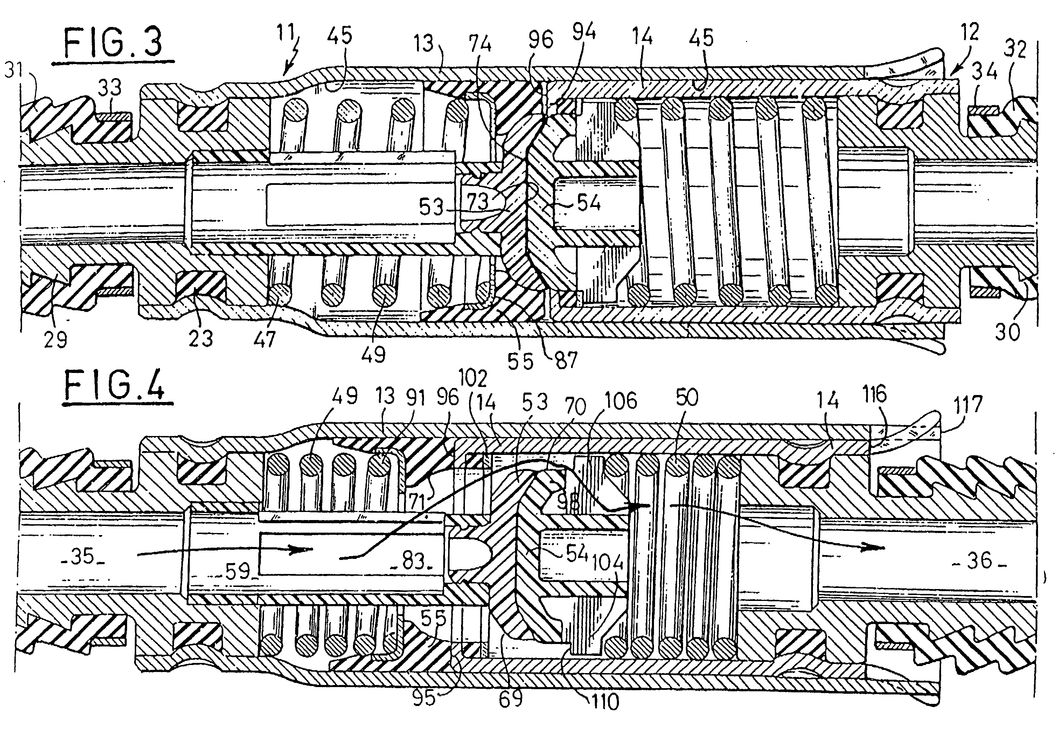

En partant de la position intermédiaire illustrée à la figure 1, l'accouplement se poursuit par rapprochement axial mutuel des deux éléments 11 et 12 jusqu'à une première position illustrée à la figure 3 dans laquelle les capuchons fixe 53 et mobile 54 viennent en contact mutuel par leurs surfaces avant complémentaires 73 et 74.

Les faces annulaires d'extrémité avant 95 et 96 du joint mobile d'étanchéité 55 et du collet 94 ne sont pas encore entrées en contact et les deux éléments 11 et 12 sont toujours obturés de manière étanche par leurs obturateurs respectifs 51, 52, aucune communication de fluide n'existant entre les deux éléments de l'agencement.

Le raccordement se poursuit par introduction axiale de l'élément mâle 12 à l'intérieur de l'élément femelle 11 jusqu'à la position axiale verrouillée de raccordement étanche illustrée à la figure 4 dans laquelle les deux éléments sont verrouillés.

Au cours de cette introduction, la face annulaire d'extrémité avant 96 du collet 94 du fourreau tubulaire 14 a sollicité axialement la face annulaire d'extrémité avant 95 du joint mobile d'étanchéité 55 provoquant un recul de ce dernier à l'intérieur du fourreau tubulaire 13, c'est-à-dire axialement de la droite vers la gauche en considérant les figures 3 et 4, et ceci à l'encontre de l'effort de rappel qui lui est appliqué par le ressort 49.

Au cours de ce même mouvement, le capuchon fixe 53 a provoqué le recul axial du capuchon mobile 54 vers l'intérieur de l'élément mâle 12, à l'encontre de l'effort de rappel qui lui est appliqué par le ressort 50.

Dans la position illustrée à la figure 4, on voit donc que les sièges d'étanchéité 69 et 70 ne coopèrent plus avec les portions complémentaires des joints 55 et 56.

Le fluide, qui pénètre par exemple dans l'agencement 10 de la gauche vers la droite, peut ainsi circuler librement à l'intérieur de la tige centrale creuse 59 puis passer à travers les fentes 83 à l'intérieur du joint 55 et ceci sans traverser aucune spire du ressort 49 car, en position d'accouplement, le joint 55 et la spire avant 91 sont situés axialement en arrière des extrémités avant des fentes 83 facilitant ainsi la circulation du fluide qui, au-delà du joint d'étanchéité 55.

Le fluide pénètre à l'intérieur de l'élément mâle 12 entre le joint d'étanchéité 56 et le siège 69 puis, au-delà du siège 70, entre les ailettes 104 directement à l'intérieur du ressort à boudin 50 sans traverser les spires de ce dernier puis à l'intérieur du perçage axial 36 de la pièce 18 de raccordement et de fixation.

Dans le cas où l'agencement 10 est utilisé pour des fortes pressions, l'élément mâle 12 est de préférence relié à l'émetteur du circuit hydraulique, la circulation du fluide s'effectuant alors dans le sens inverse de celui indiqué sur la figure 4.

Cette solution est en effet préférable dans la mesure où, en position non accouplée, c'est-à-dire déconnectée du raccord 10, l'obturateur 52 à capuchon mobile 54 est susceptible de supporter des pressions plus importantes.

On appréciera que l'air ne risque pas de pénétrer dans la conduite lors du passage de la position de la figure 3, à celui de la figure 4.

En variante les moyens de fixation des tronçons de conduite sur les queues 27,28 peuvent faire intervenir une liaison du type vis-écrou pour l'une au moins des pièces 17,18 ; toutes les combinaisons étant possibles. La tige 59 peut être monobloc avec le capuchon 53 et se fixer par collage, encliquetage ou par emmanchement à force sur la pièce 17 par sa partie arrière 77. Le verrouillage des deux éléments 11,13 peut être réalisé à l'aide d'une épingle élastique et de gorges comme dans le document FR-A-1 080 178.

La présence de la pièce 20 n'est pas nécessaire, le fourreau 14 pouvant être fixé par serrage sur le tronçon 32 semi rigide comme dans le document FR-A-2 688 291, ou souple.

Les tronçons 31,32 peuvent être souples, les fourreaux 13,14 venant se serrer sur les tronçons 31,32 et présentant des déformartions à cet effet. Dans les figures, les aillettes 104 s'étendent radialement à partir d'un manchon central 66 du capuchon mobile. En variante, les aillettes 10.4 s'étendent radialement à partir de la périphérie externe du capuchon mobile et axialement vers l'arrière, le ressort 50 prenant appui sur les faces transversales d'extrémité arrière des aillettes 104.

On peut inverser les structures, le joint 56 étant porté par l'obturateur mobile et son siège par le fourreau 14 alors épaissi à l'avant.

## Revendications

1. Un agencement d'une interconnexion de deux tronçons (31, 32) d'une conduite dans laquelle circule un fluide, appartenant notamment à un circuit de commande hydraulique d'un embrayage de véhicule automobile, du type comportant une paire d'éléments complémentaires (11, 12) dont l'un (11) comprend un corps tubulaire (13) dont l'extrémité arrière (15) est fermée par une pièce (17) de fermeture qui se prolonge axialement par une queue (27) pour le raccordement et la fixation de l'extrémité libre d'un ronçon (31) de la conduite et qui est traversée axialement par un perçage (35) qui débouche dans une chambre (43) délimitée radialement par le corps tubulaire (13) et axialement vers l'avant par un obturateur (51) normalement fermé pour rendre l'élément (11) de raccord (10) étanche lorsque les deux éléments (11, 12) ne sont'pas accouplés entre eux, et du type dans lequel l'obturateur (51) d'un premier des éléments du raccord comporte un premier capuchon (53), agencé à l'extrémité libre avant d'une tige centrale (59) de l'élément, avec lequel coopère un joint d'étanchéité (55) de forme générale annulaire qui est monté mobile axialement à l'intérieur du corps tubulaire (13) entre une position avant d'obturation vers laquelle il est rappelé élastiquement (49) et dans laquelle il intervient entre la paroi cylindrique (45) interne du corps tubulaire et un siège (69) formé sur une portion arrière du premier capuchon (53), et une position arrière d'ouverture vers laquelle il est déplacé par une portion d'extrémité avant (96) du corps tubulaire (14) du second élément (12) du raccord lorsque les deux éléments sont accouplés, **caractérisé en ce que** ladite tige centrale (59) comporte un canal axial interne (61) qui prolonge le perçage axial (35) de la pièce de fermeture et de raccordement (17) et qui débouche radialement dans ladite chambre (43) par au moins un orifice (83) formé dans la paroi cylindrique annulaire de la tige centrale (59), et **en ce que** l'extrémité libre arrière (77) de la tige centrale creuse (59) est fixée coaxialement à l'intérieur du perçage axial (35, 39) de la pièce de fermeture et de raccordement (17).

2. Un agencement selon la revendication 1, **caractérisé en ce que** ledit orifice (83) est constitué par au moins une fente (83) d'orientation axiale qui s'étend sensiblement sur toute la longueur de la tige centrale (59).

3. Un agencement selon la revendication 2, **caractérisé en ce que**, en position arrière d'ouverture du joint mobile d'étanchéité, l'extrémité avant de ladite fente (83) s'étend axialement vers l'avant au-delà de la surface de portée (71) du joint mobile d'étanchéité (55) qui est susceptible de coopérer avec ledit siège (69) du premier capuchon (53) qui est fixe.

4. Un agencement selon l'une quelconque des revendications précédentes, **caractérisé en ce que** le premier capuchon fixe (53) est rapporté sur l'extrémité libre avant (57) de la tige centrale (59).

5. Un agencement selon la revendication 4, **caractérisé en ce que** le capuchon fixe (53) comporte un pied central (65) cylindrique coaxial qui s'étend axialement vers l'arrière et qui est reçu à l'intérieur d'un logement complémentaire (63) formé dans l'extrémité libre avant (57) de la tige centrale (59) et dans lequel il est fixé axialement.

6. Un agencement selon la revendication 5, **caractérisé en ce que** le pied central (65) est emboîté élastiquement dans le logement complémentaire (63).

7. Un agencement selon la revendication 5, **caractérisé en ce que** le pied central est fixé par sertissage à l'intérieur du logement complémentaire.

8. Un agencement selon la revendication 1, **caractérisé en ce que** le joint mobile d'étanchéité (55) est rappelé élastiquement vers sa position avant d'obturation par un ressort à boudin (49) qui est monté comprimé axialement entre la pièce de fermeture et de raccordement (17, 41) et le joint mobile d'étanchéité (55).

9. Un agencement selon la revendication 7, **caractérisé en ce que** le joint mobile d'étanchéité (55) comporte un corps de joint annulaire souple en caoutchouc ou en matériau élastomère renforcé par une armature rigide (87, 89).

10. Un agencement selon la revendication 9, **caractérisé en ce que** l'extrémité avant (91) d'un ressort de rappel à boudin (49) prend appui axialement contre une surface annulaire d'appui (89) appartenant à l'armature (87) de renfort du joint mobile d'étanchéité (55).

11. Un agencement selon la revendication 1, **caractérisé en ce que** la pièce de fermeture et de raccordement (17) comporte un tronçon avant (19) de forme générale cylindrique qui est reçu, avec interposition d'un joint fixe d'étanchéité (23), à l'intérieur de la partie d'extrémité arrière (15) du corps tubulaire (13) du premier élément (11) du raccord (10).

12. Un agencement selon la revendication 11, **caractérisé en ce que** le corps tubulaire (13) est un fourreau métallique dont la partie d'extrémité arrière (15) est fixée à la pièce de fermeture et de raccordement (17) par sertissage radial au droit d'une gorge radiale interne (21) formée dans ledit tronçon avant (19).

13. Un agencement selon la revendication 12, **caractérisé en ce que** ladite gorge radiale interne (21) reçoit un joint torique fixe d'étanchéité (23) qui intervient entre le tronçon avant (19) de la pièce de fermeture et de raccordement (17) et la surface cylindrique interne (45) de la partie d'extrémité arrière (15) du fourreau.

14. Un agencement selon la revendication 1, **caractérisé en ce qu'**il comporte des moyens (73, 74) de centrage mutuel des obturateurs (51, 52) des deux éléments (11, 12) lors de l'accouplement des deux éléments du raccord qui comportent une cavité tronconique à fond plat (73) formée dans la face transversale d'extrémité avant de l'un (53) de deux capuchons, fixe et mobile appartenant respectivement aux obturateurs, et une tête de forme complémentaire (74) agencée dans la face transversale d'extrémité avant de l'autre capuchon (54).

15. Un agencement selon la revendication 1, **caractérisé en ce que** les deux éléments complémentaires du raccord sont du type mâle (12) et femelle (11), et **en ce qu'**il est prévu des moyens débrayables de verrouillage des deux éléments en position accouplés qui les retiennent axialement l'un par rapport à l'autre dans une position axiale relative.

## Patentansprüche

1. Anordnung zum Anschluß von zwei Teilstücken (31, 32) einer Leitung, in der ein Fluid zirkuliert und die insbesondere zu einem hydraulischen Betätigungskreislauf für eine Kraftfahrzeugkupplung gehört, umfassend ein Paar formschlüssiger Elemente (11, 12), von denen eines (11) einen rohrförmigen Körper (13) enthält, dessen rückseitiges Ende (15) durch ein Verschlußteil (17) verschlossen ist, das axial durch ein Endstück (27) für den Anschluß und die Befestigung des freien Endes eines der Teilstücke (31) der Leitung verlängert ist, und durch das axial eine Bohrung (35) hindurchgeht, die in eine Kammer (43) mündet, die radial durch den rohrförmigen Körper (13) und axial nach vorn durch einen normalerweise geschlossenen Verschluß (51) begrenzt wird, um das Element (11) der Rohrkupplung (10) abzudichten, wenn die beiden Elemente (11, 12) nicht zusammengefügt sind, wobei der Verschluß (51) eines ersten der Elemente der Anschlußanordnung eine erste Abdeckkappe (53) umfaßt, die am vorderen freien Ende eines mittigen Schafts (59) des Elements angeordnet ist und mit der eine allgemein ringförmige Dichtung (55) zusammenwirkt, welche axial beweglich im Innern des rohrförmigen Körpers (13) zwischen einer vorderen Verschlußposition, zu der sie elastisch (49) zurückgebracht wird und in der sie zwischen der zylindrischen Innenwand (45) des rohrförmigen Körpers und einem auf einem rückseitigen Abschnitt der ersten Abdeckkappe (53) ausgebildeten Sitz (69) wirksam wird, und einer hinteren Öffnungsposition gelagert ist, zu der sie durch einen vorderen Endabschnitt (96) des rohrförmigen Körpers (14) des zweiten Elements (12) der Rohrkupplung verschoben wird, wenn die beiden Elemente zusammengefügt sind,
**dadurch gekennzeichnet, daß** der besagte mittige Schaft (59) einen inneren Kanal (61) enthält, der die axiale Bohrung (35) des Verschluß- und Anschlußteils (17) verlängert und der radial in die besagte Kammer (43) durch mindestens eine Öffnung (83) mündet, die in der ringförmigen zylindrischen Wand des mittigen Schafts (59) ausgebildet ist, und daß das freie rückseitige Ende (77) des hohlen mittigen Schafts (59) koaxial im Inneren der axialen Bohrung (35, 39) des Verschluß- und Anschlußteils (17) befestigt ist.

2. Anordnung nach Anspruch 1, **dadurch gekennzeichnet, daß** die besagte Öffnung (83) aus mindestens einem axial ausgerichteten Schlitz (83) besteht, der sich in etwa auf der ganzen Länge des mittigen Schafts (59) erstreckt.

3. Anordnung nach Anspruch 2, **dadurch gekennzeichnet, daß** in der hinteren Öffnungsposition der beweglichen Dichtung das vordere Ende des besagten Schlitzes (83) axial nach vorn über die Auflagefläche (71) der beweglichen Dichtung (55) hinaus erstreckt, die mit dem besagten Sitz (69) der ersten Abdeckkappe (53) zusammenwirken kann, die fest ist.

4. Anordnung nach einem der vorangehenden Ansprüche, **dadurch gekennzeichnet, daß** die feste erste Abdeckkappe (53) am vorderen freien Ende (57) des mittigen Schafts (59) angebracht ist.

5. Anordnung nach Anspruch 4, **dadurch gekennzeichnet, daß** die feste Abdeckkappe (53) einen koaxialen zylindrischen mittigen Fuß (65) umfaßt, der sich axial nach hinten erstreckt und der im Inneren einer im freien vorderen Ende (57) des mittigen Schafts (59) ausgebildeten formschlüssigen Aufnahme (63) eingesetzt ist, in der er axial befestigt ist.

6. Anordnung nach Anspruch 5, **dadurch gekennzeichnet, daß** der mittige Fuß (65) elastisch in die formschlüssige Aufnahme (63) eingepaßt ist.

7. Anordnung nach Anspruch 5, **dadurch gekennzeichnet, daß** der mittige Fuß durch Auffalzen im Inneren der besagten formschlüssigen Aufnahme befestigt ist.

8. Anordnung nach Anspruch 1, **dadurch gekennzeichnet, daß** die bewegliche Dichtung (55) elastisch zu ihrer vorderen Verschlußposition durch eine Schraubenfeder (49) zurückgestellt wird, die axial zusammengedrückt zwischen dem Verschluß- und Anschlußteil (17, 41) und der beweglichen Dichtung (55) eingesetzt ist.

9. Anordnung nach Anspruch 7, **dadurch gekennzeichnet, daß** die bewegliche Dichtung (55) einen biegsamen ringförmigen Dichtungskörper aus Gummi oder aus Elastomermaterial umfaßt, der durch eine starre Bewehrung (87, 89) verstärkt ist.

10. Anordnung nach Anspruch 9, **dadurch gekennzeichnet, daß** das vordere Ende (91) einer Schraubenrückstellfeder (49) axial an einer ringförmigen Auflagefläche (89) zur Auflage kommt, die zur Verstärkungsbewehrung (87) der beweglichen Dichtung (55) gehört.

11. Anordnung nach Anspruch 1, **dadurch gekennzeichnet, daß** das Verschluß- und Anschlußstück (17) ein vorderes Teilstück (19) mit einer zylindrischen Gesamtform umfaßt, das unter Einfügung einer festen Dichtung (23) im Innern des rückseitigen Abschlußteils (15) des rohrförmigen Körpers (13) des ersten Elements (11) der Rohrkupplung (10) eingesetzt ist.

12. Anordnung nach Anspruch 11, **dadurch gekennzeichnet, daß** der rohrförmige Körper (13) eine Metallhülse ist, deren rückseitiger Abschlußteil (15) am Verschluß- und Anschlußteil (17) durch radiales Auffalzen in Höhe einer in dem besagten vorderen Teilstück (19) ausgebildeten inneren radialen Auskehlung (21) befestigt ist.

13. Anordnung nach Anspruch 12, **dadurch gekennzeichnet, daß** die besagte innere radiale Auskehlung (21) einen festen Runddichtring (23) aufnimmt, der zwischen dem vorderen Teilstück (19) des Verschluß- und Anschlußteils (17) und der zylindrischen Innenfläche (45) des rückseitigen Endteils (15) der Hülse wirksam wird.

14. Anordnung nach Anspruch 1, **dadurch gekennzeichnet, daß** sie Mittel (73, 74) zur wechselseitigen Zentrierung der Verschlüsse (51, 52) der zwei Elemente (11, 12) bei der Zusammenfügung der beiden Elemente der Rohrkupplung umfaßt, die einen kegelstumpfartigen Hohlraum mit flachem Boden (73) enthalten, der in der vorderen Querabschlußfläche einer (53) von zwei festen und beweglichen Abdeckkappen ausgebildet ist, die zu den Verschlüssen gehören, und einen formschlüssigen Kopf (74), der in der vorderen Querabschlußfläche der anderen Abdeckkappe (54) angeordnet ist.

15. Anordnung nach Anspruch 1, **dadurch gekennzeichnet, daß** die beiden formschlüssigen Elemente der Rohrkupplung als Einsteckelement (12) und Aufnahmeelement (11) ausgeführt sind und daß ausrückbare Mittel zur Verriegelung der beiden Elemente in zusammengefügter Position vorgesehen sind, die sie axial im Verhältnis zueinander in einer relativen axialen Position halten.

## Claims

1. A device for connecting together two portions (31, 32) of a pipe in which a fluid flows and which is, in particular, part of a hydraulic control circuit for a motor vehicle clutch, the device being of the type comprising a pair of complementary coupling elements (11, 12), one of which (11) comprises a tubular body (13), the rear end (15) of which is closed by a closure member (17) which is extended axially by a tail (27) for coupling and fastening thereto a free end of one portion (31) of the pipe, the closure member having an axial through aperture (35) which is open into a chamber (43) delimited radially by the tubular body (13) and axially at the front by an obturator (51), which is normally closed so as to seal the element (11) of the coupling (10) when the two elements (11, 12) are not coupled together, the device also being of the type in which the obturator (51) of a first one of the coupling elements consists of a first plug (53), which is arranged at the free front end of a central rod (59) of the element and with which there co-operates a generally annular seal ring (55), which is mounted for axial movement inside the tubular body (13), between a forward obturating position towards which it is resiliently biased and in which it acts between the cylindrical inner wall (45) of the tubular body and a seating (69) formed on a rear portion of the first plug (53), and a rearward opening position towards which it is displaced by a front end portion (96) of the tubular body (14) of the second element (12) of the coupling when the two elements are coupled together,
**characterised in that** the said central rod (59) has an axial internal duct (61) which extends the axial through aperture (35) of the closure and coupling member (17) and which is open radially into the said chamber (43) through at least one orifice (83) formed in the annular cylindrical wall of the central rod (59), and **in that** the free rear end (77) of the hollow central rod (59) is fixed coaxially to the interior of the axial through aperture (35, 39) of the closure and coupling member (17).

2. A device according to Claim 1, **characterised in that** the said orifice (83) comprises at least one axially oriented slot (83) which extends over substantially the whole length of the central rod (59).

3. A device according to Claim 2, **characterised in that**, in the rearward opening position of the movable seal ring, the front end of the said slot (83) extends axially forward from the seating surface (71) of the movable seal ring (55) that is arranged for cooperation with the said seating (69) of the first plug (53), which is fixed.

4. A device according to any one of the preceding Claims, **characterised in that** the fixed first plug (53) is mounted on the free front end (57) of the central rod (59).

5. A device according to Claim 4, **characterised in that** the fixed plug (53) includes a coaxial central foot (65) which extends axially towards the rear and which is received within a complementary housing (63) formed in the free front end (57) of the central rod (59), the foot being secured axially in the said housing.

6. A device according to Claim 5, **characterised in that** the central foot is fitted elastically within the complementary housing (63).

7. A device according to Claim 5, **characterised in that** the central foot is secured by seaming within the complementary housing.

8. A device according to Claim 1, **characterised in that** the movable seal ring (55) is biased axially forward towards its obturating position by a coil spring (49) which is mounted in axial compression between the closure and coupling member (17, 41) and the movable seal ring (55).

9. A device according to Claim 7, **characterised in that** the movable seal ring (55) comprises a flexible annular seal body, of rubber or an elastomeric material reinforced with a rigid armature (87, 89).

10. A device according to Claim 9, **characterised in that** the front end (91) of a coil-type return spring (49) bears axially against an annular thrust surface (89) of the reinforcing armature (87) of the movable seal ring (55).

11. A device according to Claim 1, **characterised in that** the closure and coupling member (17) includes a generally cylindrical front portion (19) which is received, with a fixed seal ring (23) interposed, within the rear end portion (15) of the annular body (13) of the first element (11) of the coupling (10).

12. A device according to Claim 11, **characterised in that** the tubular body (13) is a metallic sleeve, the rear end portion (15) of which is secured to the closure and coupling member (17) by radial seaming in line with a radial internal groove (21) formed in the said front portion (19).

13. A device according to Claim 12, **characterised in that** the said radial internal groove (21) receives a fixed O-ring seal (23) which acts between the front portion (19) of the closure and coupling member (17) and the cylindrical inside surface (45) of the rear end portion (15) of the sleeve.

14. A device according to Claim 1, **characterised in that** it includes means (73, 74) for the mutual centring of the obturators (51, 52) of the two coupling elements (11, 12) while the two coupling elements are being connected together, the centring means comprising a frustoconical cavity with a flat base (73), formed in the front transverse end face of one (53) of two plugs, one of which is fixed and the other movable, of the respective obturators, together with a head (74) of complementary form which is arranged in the front transverse end face of the other plug (54).

15. A device according to Claim 1. **characterised in that** the two complementary elements of the coupling are of the male type (11) and the female type (12), and **in that** means are provided for disengageably locking the two elements together in their coupled state by retaining them axially in a relative axial position with respect to each other.
